# EUROPEAN PATENT APPLICATION

(11) **EP 3 101 775 A1**
(43) Date of publication of application: **07.12.2016**
(21) Application number: 15743059.6
(22) Date of filing: 29.01.2015
(51) Int. Cl.: H02J 13/00, H04Q 9/00

(54) **OPERATING DEVICE AND OPERATING METHOD**

(30) Priority: 29.01.2014 JP 2014014945
(71) Applicant: Kyocera Corporation, Kyoto-shi, Kyoto 612-8501 (JP)
(72) Inventor: SATO, Yuri, Kyoto-shi, Kyoto 612-8501 (JP)
(74) Representative: Schwabe - Sandmair - Marx
(86) International application number: PCT/JP2015/052590
(87) International publication number: WO 2015/115572

(57) **Abstract**

An operation apparatus operates consumer equipment controlled by a EMS via a first network provided in a power consumer facility. The operation apparatus comprises a controller configured to designate an operatable function among a plurality of functions of the consumer equipment, and transmit an operation instruction to a designated function from the operatable function. The controller is further configured to designate the operatable function according to whether the operation apparatus is located outside the consumer facility.

## Description

### TECHNICAL FIELD

The present invention relates to an operation apparatus and an operation method for operating equipment installed in a power consumer facility.

### BACKGROUND ART

In recent years, control apparatuses for controlling equipment provided in power consumer facilities (see, e.g., Patent Literature 1) have attracted public attention. Such control apparatuses are called energy management systems (EMS). Examples of the equipment include a load (e.g., an air conditioner, a lighting tool, or a refrigerator) that consumes power for operation, or a distributed power source (e.g., a photovoltaic generation apparatus, a storage battery apparatus, or a fuel cell apparatus).

Examples of the control apparatuses include a home energy management system (HEMS), a building energy management system (BEMS), a factory energy management system (FEMS), a store energy management system (SEMS), and a cluster/community energy management system (CEMS). The control apparatus transmits a request message for requesting execution of a function, which is designated from a plurality of functions of the equipment, to the equipment via a network provided in the consumer facility.

Meanwhile, an increasing number of smart phones, tablet terminals, and the like are used as operation apparatuses for operating the equipment. The operation apparatus generates an operation instruction for the equipment in accordance with information input by a user, and transmits the operation instruction to the control apparatus. The control apparatus acquires the operation instruction from the operation apparatus, generates the request message in accordance with the operation instruction, and transmits the generated request message to the equipment.

The operation apparatus enables remote control of the equipment from the outside of the consumer facility. Controlling the equipment from outside, however, requires higher consideration on safety than operating the equipment from the inside of the consumer facility, because checking the operation state of the equipment from the outside of the consumer facility is difficult.

### CITATION LIST

### PATENT LITERATURE

Patent Literature 1: Japanese application publication No. 2010-128810

### SUMMARY

An operation apparatus according to a first aspect operates consumer equipment controlled by a control apparatus via a first network provided in a power consumer facility. The operation apparatus comprises a controller configured to designate an operatable function among a plurality of functions of the consumer equipment, and transmit an operation instruction to a designated function from the operatable function. The controller is further configured to designate the operatable function according to whether the operation apparatus is located outside the consumer facility.

An operation method according to a second aspect is an operation method of an operation apparatus for operating consumer equipment controlled by a control apparatus via a first network provided in a power consumer facility. The operation method comprises designating an operatable function among a plurality of functions of the consumer equipment and transmitting an operation instruction for a designated function among the operatable function. The operation apparatus designates the operatable function according to whether the operation apparatus is located outside the consumer facility.

### BRIEF DESCRIPTION OF DRAWINGS

Fig. 1 illustrates a control system according to an embodiment.
Fig. 2 is a block diagram illustrating an EMS according to the embodiment.
Fig. 3 is a block diagram illustrating an operation apparatus according to the embodiment.
Fig. 4 illustrates a scene using a control system according to the embodiment.
Fig. 5 illustrates a property table according to the embodiment.
Fig. 6 illustrates remote control information according to the embodiment.
Fig. 7 is a display example of the operation apparatus according to the embodiment.
Fig. 8 is a flowchart illustrating a control method according to the embodiment.

### DESCRIPTION OF EMBODIMENTS

Hereinafter, the control system according to the embodiment will be described. Note that the same or similar reference signs are applied to the same or similar portions in the following descriptions of the drawings.

It must be understood that the drawings are schematic, and the ratio of each dimension and the like may differ from the real one. Accordingly, specific dimensions and the like should be understood with reference to the following description. Furthermore, it must be understood that, the relationship or ratio of dimensions included in each of the drawings may differ.

### [Overview of embodiment]

An operation apparatus according to the embodiment operates consumer equipment controlled by a control apparatus via a first network provided in a power consumer facility. The operation apparatus comprises a controller configured to designate an operatable function among a plurality of functions of the consumer equipment, and transmit an operation instruction to a designated function from the operatable function. The controller is further configured to designate the operatable function according to whether the operation apparatus is located outside the consumer facility.

According to the embodiment, the operatable function is selected among the plurality of functions of the equipment according to whether the operation apparatus is located outside the consumer facility. Thus, the operation apparatus and the operation method capable of increasing safety and improving convenience can be provided.

### [Embodiment]

### (Control System)

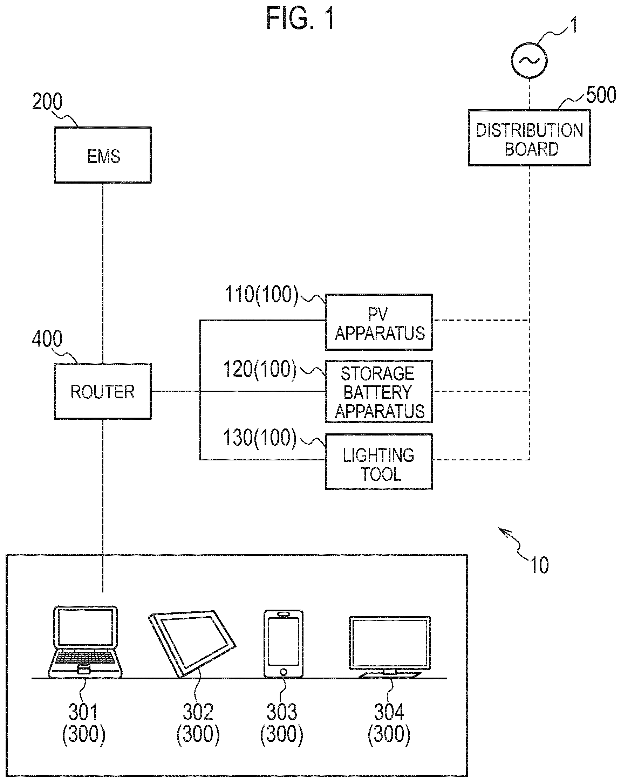

A control system according to an embodiment will be described below. Fig. 1 illustrates a control system 10 according to the embodiment.

The control system 10 includes equipment 100 provided in a consumer facility, an EMS 200, and an operation apparatus 300, as illustrated in Fig. 1. In Fig. 1, a solid line indicates a signal line for transmitting signals and a broken line indicates a power line for transmitting electric power. A wired or radio signal line may be used.

The equipment 100 is, for example, a load that operates by consuming electric power, or a distributed power source that outputs electric power. The load consumes electric power received via the power line. Examples of the load include home electric equipments, such as a refrigerator, a freezer, a lighting tool, or an air conditioner. Examples of the distributed power source include a photovoltaic generation apparatus (PV apparatus), a storage battery apparatus, and a fuel cell apparatus. Fig. 1 illustrates a PV apparatus 110, a storage battery apparatus 120, and a lighting tool 130 as examples of the equipment 100.

A distribution board 500 is connected to a distribution line 1 (grid). The distribution board 500 is connected to the equipment 100 (the PV apparatus 110, the storage battery apparatus 120, and the lighting tool 130) via the power line.

The PV apparatus 110 is a photovoltaic generation apparatus that generates electric power in response to reception of solar light. The PV apparatus 110 converts generated DC power to AC power, and outputs the AC power to the distribution board 500 via the power line. The PV apparatus 110 changes its power generation amount according to an insolation amount.

The storage battery apparatus 120 stores electric power. The storage battery apparatus 120 converts the AC power supplied from the grid 1 to the DC power, and stores the DC power. The storage battery apparatus 140 converts the output DC power into the AC power, and outputs the AC power to the distribution board 500 via the power line.

The lighting tool 130 operates by consuming power output from the distribution board 500.

The EMS 200 is an example of the control apparatus (energy management system) for controlling and managing the equipment 100.

The EMS 200 is connected to the PV apparatus 110, the storage battery apparatus 120, and the lighting tool 130 via a narrow area network (first network) provided in the consumer facility. The first network is, for example, a home area network that includes a router 400, a signal line, and the like.

The EMS 200 receives/transmits a message from and to the equipment 100 in accordance with a predetermined communication protocol. The EMS 200 thus controls and manages the equipment 100. Examples of the predetermined communication protocol include ECHONET Lite (registered trademark). The equipment 100 and the EMS 200 that support the ECHONET Lite (registered trademark) function as ECHONET Lite (registered trademark) nodes defined in the ECHONET Lite (registered trademark).

The EMS 200 may be connected to servers via a public network (second network) such as the Internet. The EMS 200 may acquire, from the servers, information such as unit buying price or unit selling price of electric power from and to the grid 1.

The operation apparatus 300 operates the equipment 100. Examples of the operation apparatus 300 include a personal computer 301, a tablet terminal 302, a smart phone 303, and a television 304. The operation apparatus 300 can operate the equipment 100 remotely from the outside of the consumer facility via the first and second networks.

### (Structure of EMS)

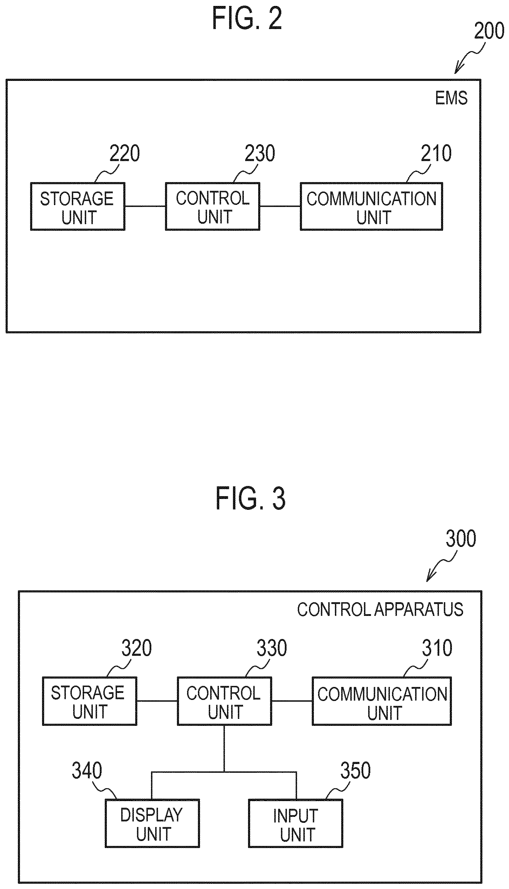

The EMS according to the embodiment is described below. Fig. 2 is a block diagram illustrating the EMS 200 according to the embodiment.

As illustrated in Fig. 2, the EMS 200 includes a communication unit 210, a storage unit 220, and a control unit 230.

The communication unit 210 communicates with the equipment 100 and the operation apparatus 300.

The communication unit 210 may receive information necessary for control and management of the equipment 100 from servers via the second network.

The storage unit 220 stores information necessary for control and management of the equipment 100. Specifically, the storage unit 220 stores information of the equipment 100. The information of the equipment 100 includes, for example, specification information indicating specifications of the equipment 100 (e.g., a maker code, a production serial number, a model, and the rated output or rated power consumption) and status information indicating the status of the equipment 100 (e.g., a power source state, temperature setting, power output or power consumption, and an operation mode).

The storage unit 220 further stores information (i.e., control information by operation state) that indicates whether the controllable functions can be controlled according to the operation state of the EMS 200.

The control unit 230 controls the communication unit 210 and the storage unit 220.

The control unit 230 acquires information, from the equipment 100, indicating a plurality of functions of the equipment 100.

The control unit 230 transmits, to the equipment 100, a request message for controlling the equipment 100. Specifically, the control unit 230 generates the request message for requesting execution of a function designated from the plurality of functions of the equipment 100, and transmits the request message to the equipment 100 via the communication unit 210.

The control unit 230 transmits information indicating the plurality of functions of the equipment 100 to the operation apparatus 300 via the communication unit 210.

When the control unit 230 receives, from the operation apparatus 300, an operation instruction for a function designated from the plurality of functions of the equipment 100, the control unit 230 generates the request message for requesting the execution of the designated function. The control unit 230 transmits the request message having been generated to the equipment 100 via the communication unit 210.

### (Structure of Operation Apparatus)

An operation apparatus according to the embodiment is described below. Fig. 3 is a block diagram illustrating the operation apparatus 300 according to the embodiment.

The operation apparatus 300 includes a communication unit 310, a storage unit 320, a control unit 330, a display unit 340, and an input unit 350, as illustrated in Fig. 3.

The communication unit 310 communicates with the EMS 200 via the network provided in the consumer facility. The communication unit 310 may communicate with the equipment 100 when the operation apparatus 300 is in accordance with the predetermined communication protocol.

The storage unit 320 stores information acquired via the communication unit 310.

The storage unit 320 stores information (controllable function information) indicating a function (controllable function) of the equipment that belongs to a controllable class. The controllable function will be described later. The storage unit 320 further stores information (remote control information) indicating whether remote control is available for the controllable function.

The control unit 330 controls the communication unit 310, the storage unit 320, and the display unit 340.

The control unit 330 acquires information indicating a plurality of functions of the equipment 100 from the EMS 200.

The control unit 330 generates the operation instruction for the equipment 100 according to the information input by the user, and transmits the operation instruction to the EMS 200 via the communication unit 310. Specifically, the control unit 330 designates a function (operatable function) among the plurality of functions of the equipment 100, and transmits the operation instruction for the designated function among the operatable functions. The control unit 330 designates the operatable function among the plurality of functions of the equipment 100 according to whether the operation apparatus 300 is located outside the consumer facility.

The display unit 340 displays information of the equipment 100. Specifically, the display unit 330 displays information indicating the operatable function (operatable function information).

The input unit 350 is, for example, a keyboard that allows the user to input information for control or management of the equipment 100. For example, the user inputs, from the input unit 350, information to be displayed on the display unit 340. Alternatively, the user designates a function to be controlled among the operatable functions, and inputs the information to operate the designated function from the input unit 350. The input unit 350 may be, for example, a touch panel that is formed integrally with the display unit 340.

### (Scene of Use)

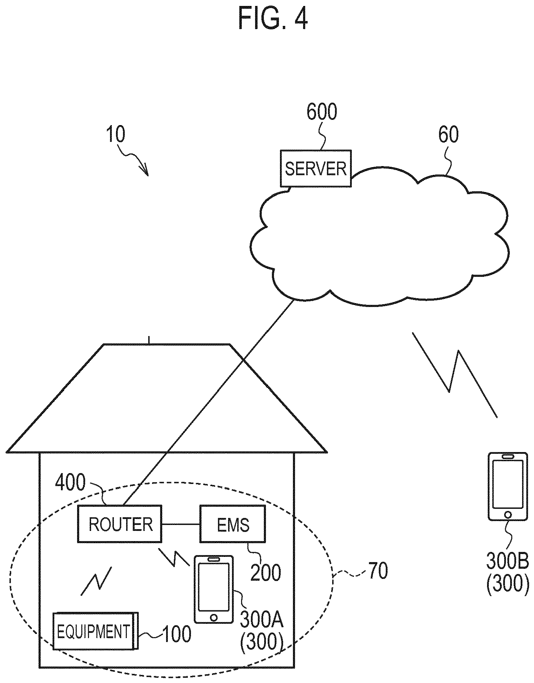

A scene of use according to the embodiment is described below. Fig. 4 illustrates a scene using a control system 10 according to the embodiment.

In Fig. 4, the consumer facility is illustrated as a private residence. A router 400 forms a first network 70 provided in the consumer facility. The router 400 may form a radio or wired LAN as the first network 70.

Fig. 4 illustrates examples of the operation apparatus 300 including an operation apparatus 300A connected to the first network 70 and an operation apparatus 300B connected to a second network 60. The operation apparatus 300A is, for example, a smart phone that is connected to the router 400 by radio or a personal computer that is connected to the router 400 by wired.

The operation apparatus 300A generates the operation instruction according to the information input by the user, and transmits the operation instruction to the EMS 200. The EMS 200, when received the operation instruction from the operation apparatus 300A, generates the request message according to the operation instruction, and transmits the generated request message to the equipment 100. The operation apparatus 300A thus operates the equipment 100 via the router 400 and the EMS 200.

The operation apparatus 300B is, for example, a smart phone capable of accessing a server 600.

The server 600 is provided on the second network 60 and is connected to the EMS 200 via the second network 60. The server 600 relays the operation instruction, which has been transmitted from the operation apparatus 300B, to the EMS 200.

Herein, the operation apparatus 300B is not constantly connected to the server 600. Further, it is not preferable, from a security point of view, to constantly keep a session between the EMS 200, which is connected to the first network 70 in the consumer facility, and the server 600. A fire wall is typically provided between the second network 60 and the first network 70 to protect apparatuses connected to the first network 70. This prevents free access from the server 600 to the EMS 200. Preferably, therefore, the server 600 transmits the operation instruction received from the operation apparatus 300B to the EMS 200 in response to an inquiry that is made regularly to the server 600 by the EMS 200.

But the embodiment is not limited to this. For example, the server 600 may transmit the operation instruction received from the operation apparatus 300B to the EMS 200 at predetermined timing by, for example, opening a port of the fire wall.

When relaying the operation instruction transmitted from the operation apparatus 300B to the EMS 200, the server 600 transmits the operation instruction to the EMS 200 with additional information indicating that the operation apparatus 300B has transmitted the operation instruction. The EMS 200, after having acquired the operation instruction transmitted from the operation apparatus 300B, generates the request message in accordance with the operation instruction, as in the case of the operation apparatus 300A, and transmits the generated request message to the equipment 100. The operation apparatus 300B thus operates the equipment 100 remotely.

### (Property Table)

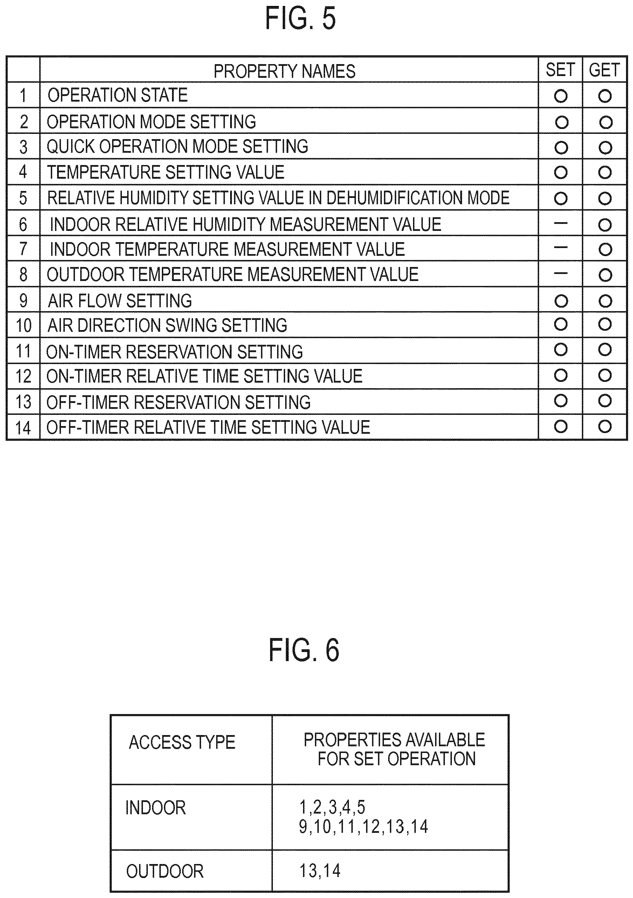

The operation apparatus 300 selects the operatable function as described below according to the embodiment. Fig. 5 illustrates a property table according to the embodiment. Fig. 6 illustrates remote control information according to the embodiment.

As described above, the operation apparatus 300 (operation apparatus 300A) can control the equipment 100 from the inside of the house (consumer facility), and the operation apparatus 300 (operation apparatus 300B) can also remotely control the equipment 100 from the outside of the house (consumer facility). In remotely controlling the equipment 100 with the operation apparatus 300B, safety precaution is further required compared to using the operation apparatus 300A, because checking the operation state of the equipment 100 from the outside of the house is difficult.

The operation apparatus 300, therefore, selects an operatable function among a plurality of functions of the equipment 100 according to whether the operation apparatus 300 is located outside the consumer facility. In one example, the ECHONET Lite (registered trademark) is used as a predetermined communication protocol as described below.

First, as illustrated in Fig. 5, the operation apparatus 300 (storage unit 320) stores a property table for the equipment (controllable equipment) that belongs to a controllable class. The controllable class of equipment is defined in the ECHONET Lite (registered trademark). The property table of Fig. 5 corresponds to the equipment that belongs to a class of air conditioners.

The property table of Fig. 5 includes data lines corresponding to "property names", "Set" and "Get". The data lines corresponding to the "property names" indicate names of items (properties) that identify the status of the controllable equipment. The data lines corresponding to the "Set" indicate whether a property setting function (Set command) is available for the corresponding property. The data lines corresponding to the "Get" indicate whether a property reference function (Get command) is available for the corresponding property. Thus, the "function" of the equipment refers to the property setting function of the equipment, or the property reference function of the equipment.

For example, both the property setting function and the property reference function are executable for the "operation state" property of the controllable equipment in Fig. 5. When the EMS 200 transmits the request message (Set command) to request changing the operation state to on-state to the controllable equipment, the controllable equipment executes the function to change the operation state of the equipment from off-state to on-state. The controllable equipment then generates a response message indicating that the function has been executed, and transmits the response message to the EMS 200. Similarly, when the EMS 200 transmits the request message (Get command) to request reference of the operation state, the controllable equipment transmits the response message including the information of the operation state (e.g., on-state) of the equipment to the EMS 200.

Next, the operation apparatus 300 (storage unit 320) also stores remote control information indicating whether the remote control of the functions (controllable functions) of the controllable equipment, as illustrated in Fig. 6. In Fig. 6, an "access type" is indoor when the operation is from the operation apparatus 300A, and the "access type" is outdoor when the operation is remote control from the operation apparatus 300B. "Properties available for SET operation" illustrate properties capable of being set according to the operation instruction from the operation apparatus 300A and properties capable of being set according to the operation instruction from the operation apparatus 300B. The properties are indicated by item numbers of the property table illustrated in Fig. 5. Specifically, in the example of Figs. 5 and 6, the properties capable of being set by the remote control among the controllable functions are the off-timer reservation function and the off-timer relative time setting value, as illustrated in Fig. 5.

The operation apparatus 300 (control unit 330) then acquires information, from the EMS 200, indicating a plurality of functions of the equipment 100. The EMS 200 identifies functions, among the controllable functions, corresponding to the individual functions of the equipment 100. The operation apparatus 300 determines whether the remote control is available for the individual functions of the equipment 100 according to the remote control information of the identified functions.

The operation apparatus 300 thus selects the remote controllable function among the plurality of functions of the equipment 100 when it is determined that the operation apparatus 300 is the operation apparatus 300B which is located outdoors. The operation apparatus 300 is determined to be located outdoors (operation apparatus 300B) when the operation apparatus 300 is further connected to the EMS 200 via the second network 60 different from the first network 70. For example, the operation apparatus 300 is determined to be located outdoors (operation apparatus 300B) when the transmitting address of the message received by the operation apparatus 300 is the server 600.

### (Display Mode)

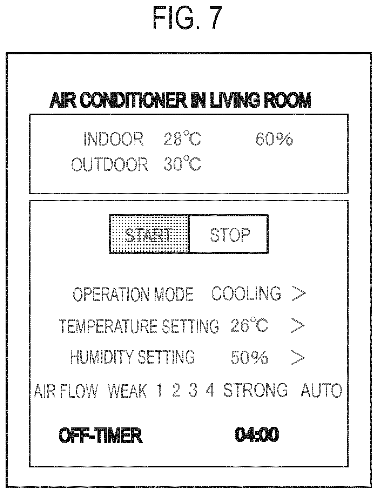

A display mode of the operation apparatus according to the embodiment is described below. Fig. 7 is an example display mode of the operation apparatus 300 according to the embodiment.

As illustrated in Fig. 7, the operation apparatus 300 (display unit 340) displays operatable information.

The operation apparatus 300 may not display information of functions other than operatable functions among the plurality of functions of the equipment 100. In this case, the user can determine that the functions corresponding to the information displayed on the operation apparatus 300 among the plurality of functions of the equipment 100 are operatable.

The operation apparatus 300 may alternatively display information of functions other than the operatable functions among the plurality of functions of the equipment 100 as unoperatable information. For example, the operation apparatus 300 may change a display color of the operatable information when a mouse cursor is moved to the operatable information on the display unit 340 to indicate that the designated function is operatable. The operation apparatus 300 may not change the display color of the unoperatable information when the mouse cursor is moved to the unoperatable information to indicate that the designated function is unoperatable.

In Fig. 7, the operatable information is distinguished from the unoperatable information by, for example, displaying text of the operatable information (off-timer setting) in a dark color and displaying text of other information in a light color.

### (Control Method)

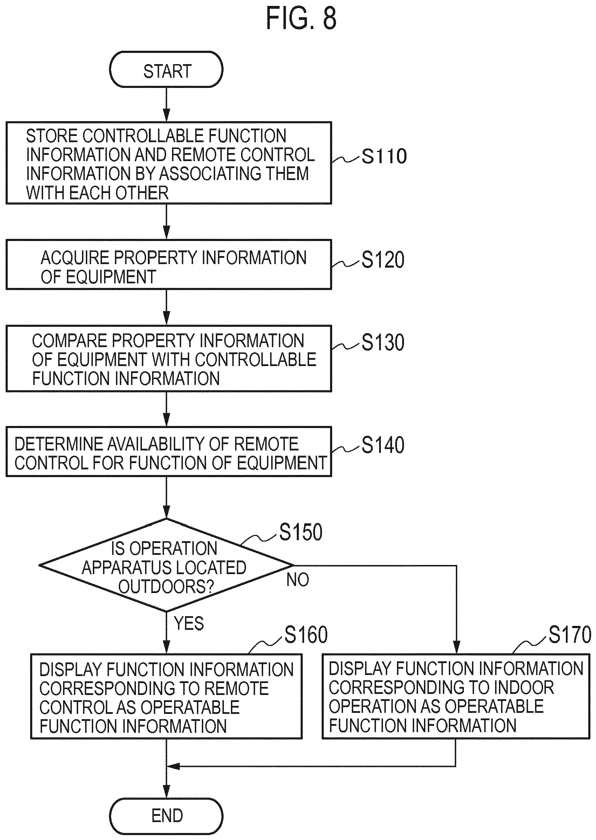

A control method according to the embodiment is described below. Fig. 8 is a flowchart illustrating the control method according to the embodiment.

As illustrated in Fig. 8, the operation apparatus 300 stores information of the controllable functions and the remote control information by associating them with each other in step S110.

In step S120, the operation apparatus 300 acquires the property information of the equipment 100. Specifically, the operation apparatus 300 transmits the request message for requesting the property information to the equipment 100, and receives the property information in the response message that corresponds to the request message. The property information of the equipment 100 includes, for example, information of the property names of the equipment 100, as in the property table of Fig 5, and information indicating whether the setting and reference are available for the properties of the equipment 100. The operation apparatus 300 is informed of the class of the equipment 100 in accordance with the acquired property information.

In step S130, the operation apparatus 300 compares the property information of the equipment 100 with the controllable function information.

In step S140, the operation apparatus 300 determines whether the remote control is available for the functions of the equipment 100.

In step S150, the operation apparatus 300 determines whether the operation apparatus 300 is located outdoors. Specifically, the operation apparatus 300 determines the operation apparatus 300 to be located outdoors when the transmitting address of the message received from the EMS 200 is the server 600. Meanwhile, the operation apparatus 300 determines the operation apparatus 300 to be located indoors when the transmitting address of the message received from the EMS 200 is the EMS 200. If a result of determination is YES, the operation apparatus 300 proceeds to the processing of step S160. If the result of determination is NO, the operation apparatus 300 proceeds to the processing of step S170.

In step S160, the operation apparatus 300 displays functions corresponding to the remote control as the operatable function information.

In step S170, the operation apparatus 300 displays functions corresponding to the operation from inside of the house (indoor operation) as the operatable function information.

As described above, the operation apparatus 300 in the embodiments selects the operatable function among the plurality of functions of the equipment 100 according to whether the operation apparatus 300 is located outdoors (outside of the consumer facility). The operation apparatus 300 can only set the functions having low risk of causing a power leakage accident, a fire, or the like, among the plurality of functions of the equipment 100 as remote controllable functions to increase safety. The operation apparatus 300 can improve its convenience by selecting the function corresponding to the indoor operation when the operation apparatus 300 is used indoors. In addition, the operation apparatus 300 can prevent useless input of information and useless transmission of the operation instruction by stopping the transmission of the operation instruction for the unoperatable function.

Therefore, the operation apparatus and the operation method capable of increasing the security and improving the conveniences are provided.

### [Other Embodiments]

Although the embodiment of the present invention has been described above, it should not be understood that the description and drawings that constitute part of the above disclosure limit the present invention. Apparently, persons who have ordinary skill in the art would devise various other embodiments, examples, and operational techniques from this disclosure.

In the embodiments, the ECHONET Lite (registered trademark) is used as the predetermined communication protocol. The embodiment, however, is not limited to this, and another communication protocol (e.g., ZigBee (registered trademark) or KNX) other than the ECHONET Lite (registered trademark) as the predetermined communication protocol. Alternatively, the ECHONET Lite (registered trademark) may be used in combination with other communication protocol as the predetermined communication protocol.

In the embodiment, the operation apparatus 300 transmits the operation instruction to the EMS 200 and the EMS 200 transmits the request message to the equipment 100 in accordance with the operation instruction. The embodiment is not limited to this, and the operation apparatus 300 may directly transmit the operation instruction to the equipment 100 when the operation apparatus 300 corresponds to the predetermined communication protocol.

In the embodiment described above, the EMS 200 transmits all of the plurality of functions of the equipment 100 to the operation apparatus 300. However, the embodiment is not limited to this. For example, the EMS 200 may only transmit the functions selected from the plurality of functions of the equipment 100 according to the operation state of the EMS 200 to the operation apparatus 300. The operation state of the EMS 200 includes, for example, a normal operation state in which the functions of the EMS 200 can be executed, an abnormal state such as a power-off state or a failure occurrence state, and a power saving state in which the power consumption of the consumer facility needs to be reduced. This prevents transmission of the operation instruction from the operation apparatus 300 when the function is unoperatable due to the reason of the EMS 200, although the function is operatable according to the positional condition of the operation apparatus 300.

The EMS 200 may be the home energy management system (HEMS), the store energy management system (SEMS), the building energy management system (BEMS), or the factory energy management system (FEMS).

The entire contents of Japanese application No. 2014-14945 (filed on January 29, 2014) have been incorporated into the description by reference.

### INDUSTRIAL APPLICABILITY

According to the embodiment, the operation apparatus and the operation method capable of increasing safety and improving convenience can be provided.

## Claims

1. An operation apparatus for operating consumer equipment controlled by a control apparatus via a first network provided in a power consumer facility, the operation apparatus comprising:
a controller configured to designate an operatable function among a plurality of functions of the consumer equipment, and transmit an operation instruction to a designated function from the operatable function, wherein
the controller is further configured to designate the operatable function according to whether the operation apparatus is located outside the consumer facility.

2. The operation apparatus according to claim 1, further comprising:
a storage configured to store information indicating a controllable function of equipment that belongs to a controllable class, wherein
the storage is further configured to store remote control information indicating whether remote control is available for the controllable function from the outside of the consumer facility,
the controller is further configured to acquire information indicating the plurality of functions from the control apparatus,
the controller is further configured to identify the function corresponding to the plurality of functions among the controllable function, and determine whether the remote control is available for each of the plurality of functions, and
the controller is further configured to select a function for which the remote control is available as the operatable function among the plurality of functions when the operation apparatus is located outside the consumer facility.

3. The operation apparatus according to claim 1 or 2, further comprising:
a display configured to display operatable function information indicating the operatable function; and
an input section configured to input the operation instruction for a designated function based on the operatable function information.

4. The operation apparatus according to claim 3, wherein
the display is further configured to display no information indicating a function other than the operatable function among the plurality of functions.

5. The operation apparatus according to claim 3, wherein
the display is further configured to display information indicating a function other than the operatable function among the plurality of functions as unoperatable information.

6. The operation apparatus according to any one of claims 1 to 5, wherein
the controller is further configured to determine that the operation apparatus is located outside the consumer facility when the operation apparatus is connected to the control apparatus via a second network different from the first network.

7. The control apparatus according to claim 6, wherein
the second network is a public network.

8. An operation method of an operation apparatus for operating consumer equipment controlled by a control apparatus via a first network provided in a power consumer facility, the operation method comprising:
designating an operatable function among a plurality of functions of the consumer equipment and transmitting an operation instruction for a designated function among the operatable function, wherein
the operation apparatus designates the operatable function according to whether the operation apparatus is located outside the consumer facility.
